# EUROPEAN PATENT SPECIFICATION

(11) **EP 1 056 581 B1**
(45) Date of publication and mention of the grant of the patent: **02.01.2002**
(21) Application number: 99900224.9
(22) Date of filing: 18.01.1999
(51) Int. Cl.: B29C 45/16, B29C 45/17, B62J 1/00

(54) **METHOD FOR MULTIPLE-INJECTION-MOLDING OF PLASTIC MATERIALS FOR MANUFACTURING INTEGRAL ELASTIC SUPPORTS AND ELASTIC SUPPORTS MANUFACTURED WITH THIS METHOD**
VERFAHREN ZUM MEHRFACH-SPRITZGIESSEN VON KUNSTSTOFFEN ZUM HERSTELLEN VON INTEGRIERTEN ELASTISCHEN STÜTZKÖRPERN UND NACH DIESEM VERFAHREN HERGESTELLTE ELASTISCHE STÜTZKÖRPER
PROCEDE DE MOULAGE DE MATERIAUX PLASTIQUES PAR INJECTIONS MULTIPLES, PERMETTANT DE FABRIQUER DES SUPPORTS ELASTIQUES MONOBLOCS, ET SUPPORTS ELASTIQUES FABRIQUES SELON LEDIT PROCEDE

(30) Priority: 21.01.1998 IT VI980007
(43) Date of publication of application: 06.12.2000
(73) Proprietor: SELLE ROYAL S.p.A., 36050 Pozzoleone (Vicenza) (IT)
(72) Inventor: BIGOLIN, Riccardo, I-31020 San Zenone degli Ezzelini (IT)
(74) Representative: O'Byrne, Daniel
(86) International application number: IB9900051
(87) International publication number: WO9937459

(56) References cited:
- EP-A- 0 517 613
- PATENT ABSTRACTS OF JAPAN vol. 17, no. 126 (M-1381), 17 March 1993 -& JP 04 308740 A (SANOU KOUGIYOU KK), 30 October 1992,
- PATENT ABSTRACTS OF JAPAN vol. 96, no. 6, 28 June 1996 & JP 08 047940 A (MITSUBISHI CHEM CORP), 20 February 1996,
- PATENT ABSTRACTS OF JAPAN vol. 97, no. 8, 29 August 1997 & JP 09 108149 A (MATSUSHITA ELECTRIC IND CO LTD), 28 April 1997,

## Description

### Technical field

The present invention relates to a process for making integral elastic supports, such as bicycle saddles or similar seat and cushion articles, made of a supporting framework of relatively rigid elastic material to which a padding of relatively yielding plastic material is secured.

### Background art

A process is known for making integral elastic supports made of several plastic materials having different physical and mechanical properties, which process is commonly called multiple-injection-molding.

By way of example, a variable geometry mold is used to make a cycle saddle of the above mentioned type, the mold being provided with an internal cavity having a first configuration corresponding to the shape of the supporting frame and a second configuration corresponding to the complete saddle shape.

A first, high density plastic material, e.g. a polypropylene resin, suitable to confer a good mechanical strength, is injected into the internal cavity of the mold in its first configuration adapted from the supporting frame.

A second plastic material with a lower density than the first one, e.g. a polyurethane foam conferring yielding properties, is then injected in the mold internal cavity in its second configuration and partially occupied by the supporting frame, so as to form the padding.

The mold is eventually open to remove the saddle and complete setting thereof.

The saddle obtained with this method is practically finished, however in the contact surface between the two materials, separations and unevenness may take place, which are caused by the stresses between the two parts of the saddle that may have remarkably different thicknesses and accordingly may undergo differentiated shrinkages. Thus, as the padding is made of a material with a lower mechanical strength, it must have greater dimensions than the framework to support the user weight. The framework has a substantially laminar structure and moreover has rather thin edges that might be dangerous or at least uncomfortable for the user.

On the other hand, making a framework with rather high and constant thickness would result in excessive weight and cost, since the material has high density.

### Disclosure of the invention

The main purpose of this invention is to eliminate the abovementioned drawbacks by means of a process for manufacturing integral elastic supports by means of multiple injection molding of plastic materials that allow to eliminate adhesion flaws and unevenness in the contact areas of the two component materials.

Another purpose of the invention is to make integral elastic supports of high mechanical strength and lightness.

Yet another purpose of the invention is to provide integral elastic supports with excellent finished surface and high aesthetic value.

The above mentioned purposes are achieved by means of a process for manufacture of integral elastic supports, such as bicycle saddles and similar cushion and seat articles, in accordance with claim 1, comprising an elastically yielding padding, firmly secured to a relatively rigid support framework, said method comprising the following steps:
A) providing a variable geometry mold having a first configuration with an internal cavity suitable to form a support framework and a second configuration, with an internal cavity suitable to form the entire support;
B) injecting a first plastic material in the internal cavity of the mold in its first configuration to form the support framework;
C) modifying the mold from said first configuration to said second configuration;
D) injecting a second plastic material different from the first plastic material in the internal cavity of the mold in its second configuration, partially occupied by the support framework, to form the padding;
E) opening the mold and removing the finished saddle;
characterised in that during step B) of injecting said first plastic material, a metered quantity of gas or air is blown in the injected mass, to form at least a lightening blow passage in the support framework.

### Brief description of the drawings

Further advantages and aspects of the invention will become more evident from the detailed description of the method according to the invention, hereafter shown by way of non-limitative example by means of the accompanying drawings, in which:

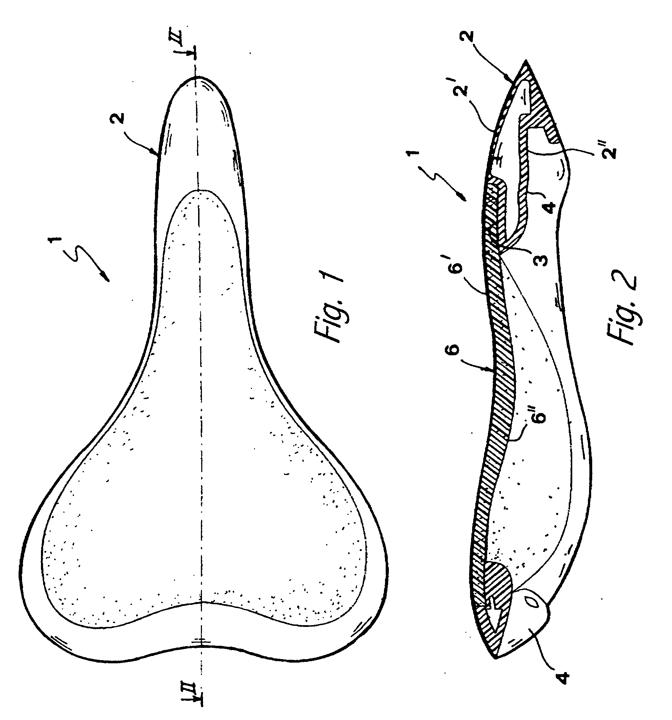

Fig. 1 shows a top view of a bicycle saddle manufactured applying the method according to the invention;
Fig. 2 shows a sectional view of the saddle of Fig. 1 taken along a longitudinal plane II-II;

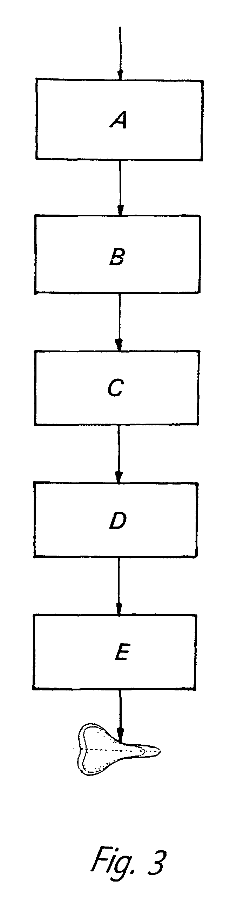

Fig.3 shows a block diagram of the method according to the invention;

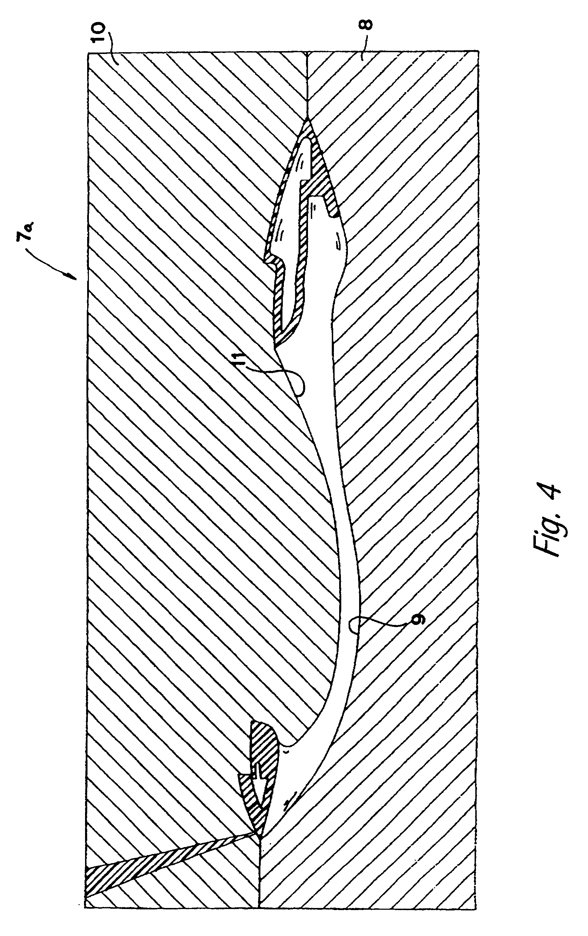

Fig. 4 shows a sectional view taken along a longitudinal plane of a mold for carrying out the method of Fig. 3 in an operating step;
Fig. 5 shows a sectional view taken along a transverse plane of the mold of Fig. 4;

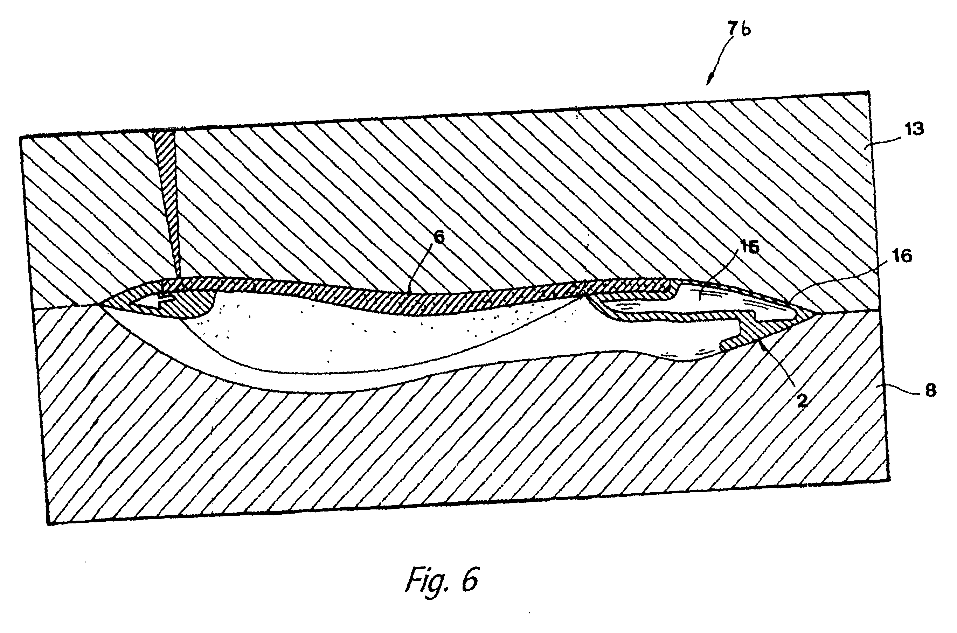

Fig. 6 shows a sectional view taken along a longitudinal plane of the mold of figures 4 and 5 in a further operation step;
Fig. 7 shows a sectional view taken along a transverse plane of the mold of figure 6.

### Description of a preferred embodiment

With reference to the cited figures, a saddle is shown which is manufactured by means of the method according to the invention, generally referenced 1.

Particularly, the saddle is formed by a relatively rigid supporting structure or framework 2 having the furiction of supporting the weight of the user and transferring it to the bicycle metal frame. From a geometric point of view, the external surface of the framework 2 will be defined by an upper surface 2' and a lower surface 2".

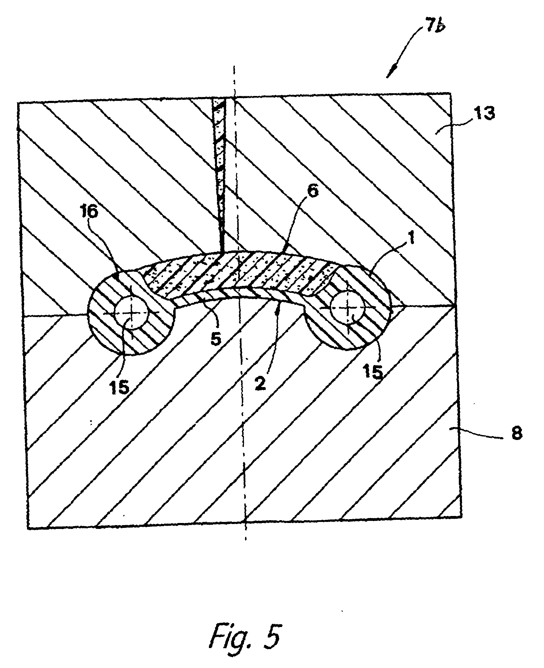

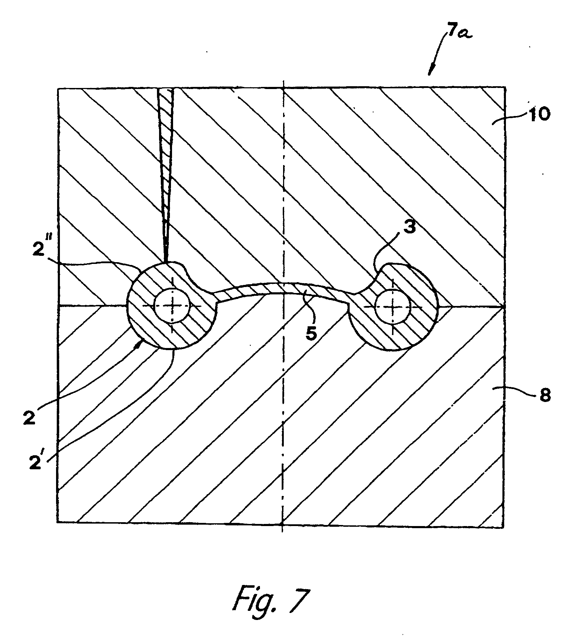

Moreover, framework 2 preferably has a substantially annular shape with an internal edge 3, appropriate protrusions or seats 4, 4' for connection with stirrups or forks and, possibly, a central reinforcing wall or membrane 5 shown in the figures 5 and 7.

Advantageously, the framework 2 can be made of a first high density plastic material, with relatively high mechanical properties, like polypropylene (PP) or nylon (PA), possibly mixed to metallic powders or the like.

A relatively yielding filler or padding 6 is fixed to the framework 2, the padding being apt to damp the vibrations and make seating for the user comfortable.

Also in this case, the padding external surface will be defined by an upper surface 6' and a lower surface 6".

Appropriately, the padding 6 can be made of a second thermoplastic elastomeric material, with lower density than the first one and with Shore hardness comprised between 20 and 60, preferably comprised between 50 and 55. Materials like Santoprene® and Megol® gave optimal results for the set purposes.

Possibly, the two materials may have different pigmentation in order to produce a highly esthetical finished product.

The method according to the invention provides the use of a special mold 7, namely a variable geometry mold that can change from a first configuration to a second configuration.

In its first configuration, generally identify as 7a, the mold is advantageously comprised of a first female element 8 with a hollow internal seat 9 apt to form the lower part 2' of the upper surface 2 of the support framework and possibly the lower part 6' of the padding.

The female element 8 may be coupled to a first male element 10 having a hollow internal convex seat 11 apt to form the remaining part 2" of the external surface of the supporting framework 2. The element 10 can be obviously provided with one or more ducts 12 for injecting the melted plastic material.

By coupling the female element 8 with the male element 10, a first configuration of the internal cavity is obtained which will provide, after injection of the material, only the support framework 2 without the padding 6.

In the second configuration 7 b the mold may be formed by the same female element 8 and by a second male element 13 with an internal seat apt to mold the remaining part of the complete saddle, i.e. the upper part 6' of the external padding surface 6 with the support framework 2 already formed and placed inside the mold.

By means of appropriate manipulators for automatic mold opening and closing and for passing from configuration 7a to 7b, it is possible to render the method fully automatic.

The method will be comprised of the following steps:
A) providing mold 7 with an internal cavity of variable geometry, which can be changed from configuration 7a to configuration 7b;
B) injecting first plastic material in the internal cavity of the mold in its first configuration to manufacture the support framework;
C) modifying the mold from first configuration 7a to second configuration 7b;
D) injecting of the second plastic material different from first one in the mold internal cavity while in its second configuration, and partially occupied by the support framework so as to form the padding;
E) opening of the mold and removing the finished saddle.

A peculiar aspect of the method according to the invention lies in the fact that, during step B) of injecting the first plastic material, a metered quantity of gas or air is blown inside the injected mass so as to form a lightening blow passage 15 in the support framework.

Particularly, the air will be blown in the mold cavity, in its first configuration 7a, in a substantially central position of the injected mass by means of a special nozzle and with a per se known technology.

Thus, the lightening blow passage 15 will be such as to provide, inside the support frame, a substantially continuous annular shaped tubular element 16, extending along the entire saddle perimeter. Appropriately, the tubular element 16 has an internal edge slightly protruding towards the centre, with respect to the external edge of the padding 6, to provide a support edge for this latter.

Thus, by appropriate metering the blown gas or air, thickness of the support framework 2 can be approximately equal to the thickness of the padding 6 thus avoiding excessive thickness variations, detachments and linkage unevenness in the contact area of the two materials.

The blow passage 15 will confer to the support framework 2 a special structural strength combined with great lightness, improving saddle strength and overall mechanical characterisation.

Moreover, the frame tubular shape will result in reduced handling risks and increased user comfort.

Though the invention has been described with reference to the figures, the invention can be subject to numerous modifications and variations, without thereby departing from the scope of the invention as defined in the attached claims.

## Claims

1. A method for manufacture of integral elastic supports (1), such as bicycle saddles and similar cushion and seat articles, comprising an elastically yielding padding (6), firmly secured to a relatively rigid support framework (2), said method comprising the following steps:
A) providing a variable geometry mold (7) having a first configuration (7a) with an internal cavity suitable to form a support framework and a second configuration (7b), with an internal cavity suitable to form the entire support;
B) injecting a first plastic material in the internal cavity of the mold in its first configuration (7a) to form the support framework (2);
C) modifying the mold from said first configuration (7a) to said second configuration (7b);
D) injecting a second plastic material different from the first plastic material in the internal cavity of the mold in its second configuration (7b), partially occupied by the support framework (2), to form the padding (6);
E) opening the mold (7a, 7b) and removing the finished saddle;
**characterised in that** during step B) of injecting said first plastic material, a metered quantity of gas or air is blown in the injected mass, to form at least a lightening blow passage (15) in the support framework (2).

2. A method according to claim 1, **characterised in that** air or gas blowing is effected in the central portion of the injected mass, to form a structural element (16) of substantially tubular shape with constant average thickness.

3. A method according to claim 2, **characterised in that** the average thickness of said substantially tubular element (16) is approximately equal to the padding thickness (6).

4. A method according to claim 2, **characterised in that** said substantially tubular element (16) has a substantially annular shape.

5. A method according to claim 3, **characterised in that** said substantially tubular element (16) is internally provided with a padding support membrane (5).

6. A method according to claim 1, **characterised in that** said variable geometry mold (7) is comprised of a first female element (8) with an internal seat (9) suitable to form a portion of the support framework and a pair of alternatively interchangeable male elements (10, 13), adapt to be selectively coupled to the first female element (8) to form a mold respectively in its first configuration (7a) and in its second configuration (7b).

7. A method according to claim 6, **characterised in that** one of said male elements (10) is provided with an internal seat suitable to form the remaining structure of the support frame, the other male element (13) being provided with an internal seat suitable to form the support remaining portion.

8. A method according to claim 1, **characterised in that** said first and second injected plastic materials are selected among thermoplastic resins with high compatibility and chemo-physical affinity to enhance their perfect adhesion.

9. A method according to claim 8, **characterised in that** said first and second plastic material have different pigmentations.

10. A method according to claim 8, **characterised in that** said first plastic material is a synthetic resin having relatively high mechanical strength.

11. A method according to claim 8, **characterised in that** said first plastic material is selected among polypropylene resins (PP) or nylon (PA).

12. A method according to claim 8, **characterised in that** said second plastic material is an elastomeric resin with Shore hardness comprised between 20 and 60, and preferably comprised between 50 and 55.

13. A method according to claim 12, **characterised in that** said second plastic material is selected among the thermoplastic and/or vulcanisable polyolefinic rubbers.

14. An integral elastic support (1), such as bicycle saddle or similar cushion and seat article, comprising a support framework (2) made of a first relatively rigid plastic material, coupled and uniformly linked to a padding (6), made of a relatively elastically yieldable plastic material, **characterised in that** said support framework is formed by a substantially annular element (16) with an lightening continuous blow passage (15) adapted to form a substantially tubular structure.

## Patentansprüche

1. Verfahren zum Herstellen von integrierten, elastischen Stützkörpern (1), wie zum Beispiel Fahradsätteln und ähnlichen Kissen und Sitzartikeln, mit einer elastisch nachgiebigen Polsterung (6), die fest verbunden ist mit einem relativ steifen Stützgitter (2), wobei dieses Verfahren die folgenden Schritte umfasst:
a) Vorsehen einer Form (7) mit variabler Geometrie mit einer ersten Ausgestaltung (7a) mit einer inneren Öffnung, die geeignet ist ein Stützgitter zu bilden, und einer zweiten Ausgestaltung (7b) mit einer inneren Öffnung, die geeignet ist das ganze Stützgitter zu bilden,
b) Einspritzen eines ersten plastischen Materials in die innere Öffnung der Form in der ersten Ausgestaltung (7a) um das Stützgitter (2) zu bilden,
c) Modifizieren der Form von der ersten Ausgestaltung (7a) zu der zweiten Ausgestaltung (7b),
d) Einspritzen eines vom ersten plastischen Material unterschiedlichen zweiten Materials in die innere Öffnung der Form in der zweiten Ausgestaltung (7b), die teilweise belegt ist vom Stützgitter (2), um die Polsterung (6) zu bilden,
e) Öffnen der ersten Form (7a, 7b) und Entfernen des fertig gestellten Sattels,
**gekennzeichnet dadurch, dass** beim Schritt b) des Einspritzen des ersten plastischen Materials eine abgemessene Menge Gas oder Luft in die eingespritzte Masse geblasen wird, um mindestens eine blitzförmige Durchblaspassage (15) im Stützgitter (2) zu bilden.

2. Verfahren gemäß Anspruch 1, **dadurch gekennzeichnet, dass** das Einblasen der Luft oder des Gases bewirkt wird in dem zentralen Abschnitt der eingespritzten Masse, um ein Strukturelement (16) von im wesentlichen rohrförmiger Form mit konstanter durchschnittlicher Dicke zu bilden.

3. Verfahren gemäß Anspruch 2, **dadurch gekennzeichnet, dass** die durchschnittliche Dicke des.im wesentlichen rohrförmigen Elements (16) ungefähr gleich der Dicke der Polsterung (6) ist.

4. Verfahren gemäß Anspruch 2, **dadurch gekennzeichnet, dass** das im wesentlichen rohrförmige Element (16) eine im wesentlichen ringförmige Form aufweist.

5. Verfahren gemäß Anspruch 3, **dadurch gekennzeichnet, dass** das im wesentlichen rohrförmige Element (16) im inneren mit einer Stützmembran (5) der Polsterung versehen ist.

6. Verfahren gemäß Anspruch 1, **dadurch gekennzeichnet, dass** die Form (7) mit variabler Geometrie ein erstes weibliches Element (8) aufweist mit einem inneren Sitz (9), der geeignet ist einen Abschnitt des Stützgitters zu bilden und ein Paar alternativ austauschbarer männlicher Elemente (10, 13), die angepasst sind, um wahlweise an das erste weibliche Element (8) gekoppelt zu werden, um jeweils eine Form zu bilden in deren erster Ausgestaltung (7a) und in deren zweiter Ausgestaltung (7b).

7. Verfahren gemäß Anspruch 6, **dadurch gekennzeichnet, dass** eines der männlichen Elemente (10) versehen ist mit einem inneren Sitz, der geeignet ist die verbleibende Struktur des Stützkörpers zu bilden, wobei das andere männliche Elemente (13) mit einem inneren Sitz versehen ist, der geeignet ist den verbleibenden Teil des Stützkörpers zu bilden.

8. Verfahren gemäß Anspruch 1, **dadurch gekennzeichnet, dass** die ersten und zweiten eingespritzten, plastischen Materialien ausgewählt sind aus thermoplastischen Harzen mit hoher Verträglichkeit und chemo-physikalischer Affinität zur Verstärkung des perfekten Anhaftens.

9. Verfahren gemäß Anspruch 8, **dadurch gekennzeichnet, dass** die ersten und zweiten plastischen Materialien unterschiedliche Pigmentierung haben.

10. Verfahren gemäß Anspruch 8, **dadurch gekennzeichnet, dass** das erste plastische Material ein synthetisches Harz ist mit relativ hoher mechanischer Festigkeit.

11. Verfahren gemäß Anspruch 8, **dadurch gekennzeichnet, dass** das erste plastische Material ausgewählt ist aus Polypropylen (PP) oder Nylon (PA) Harzen.

12. Verfahren gemäß Anspruch 8, **dadurch gekennzeichnet, dass** das zweite plastische Material ein elastomeres Harz ist mit einer Shore Härte zwischen 20 und 60 und vorzugsweise zwischen 50 und 55.

13. Verfahren gemäß Anspruch 12, **dadurch gekennzeichnet, dass** das zweite plastische Material ausgewählt ist aus thermoplastischen und/oder vulkanisierbaren polyolefinen Gummis.

14. Integrierter, elastischer Stützkörper (1), wie zum Beispiel Fahradsattel oder ähnliche Kissen- und Sitzartikel, mit einem Stützgitter (2), das aus einem ersten relativ steifen Plastikmaterial gefertigt ist, das gekoppelt und uniform verbunden ist mit einer Polsterung (6), die aus einem relativ, elastischen, nachgiebigen Plastikmaterial gefertigt ist, **dadurch gekennzeichnet, dass** der Stützkörper gebildet ist aus einem im wesentlichen ringförmigen Element (16) mit einer blitzartig, kontinuierlichen Durchblaspassage (15), die ausgebildet ist, um eine im wesentlichen rohrförmige Struktur zu bilden.

## Revendications

1. Procédé de fabrication de supports élastiques d'une seule pièce (1) tels que des selles de bicyclettes et coussins et sièges similaires, comprenant un rembourrage (6) capable de céder élastiquement, solidement fixé à une armature de support (2) relativement rigide, ledit procédé comprenant les phases suivantes :
A) prévoir un moule (7) à géométrie variable ayant une première configuration (7a) qui présente une cavité intérieure appropriée pour former une armature de support et une deuxième configuration (7b) qui présente une cavité intérieure pour former l'ensemble du support ;
B) injecter une première matière plastique dans la cavité intérieure du moule dans sa première configuration (7a) pour former l'armature de support (2) ;
C) modifier le moule pour le faire passer de ladite première configuration (7a) à ladite deuxième configuration (7b) ;
D) injecter une deuxième matière plastique différente de la première matière plastique dans la cavité du moule dans sa deuxième configuration (7b), partiellement occupée par l'armature de support (2), pour former le rembourrage (6);
E) ouvrir le moule (7a, 7b) et enlever la selle finie ;
**caractérisé en ce que**, pendant la phase B) d'injection de ladite première matière plastique, une quantité dosée de gaz d'air est insufflée dans la masse injectée pour former au moins un passage soufflé d'allègement (15) dans l'armature de support (2).

2. Procédé selon la revendication 1, **caractérisé en ce que** le soufflage d'air ou de gaz est exécuté dans la portion centrale de la masse injectée pour former un élément structurel (16) de forme sensiblement tubulaire d'une épaisseur moyenne constante.

3. Procédé selon la revendication 2, **caractérisé en ce que** l'épaisseur moyenne dudit élément sensiblement tubulaire (16) est approximativement égale à l'épaisseur du rembourrage (6).

4. Procédé selon la revendication 2, **caractérisé en ce que** ledit élément sensiblement tubulaire (16) a une forme sensiblement annulaire.

5. Procédé selon la revendication 3, **caractérisé en ce que** ledit élément sensiblement tubulaire (16) est muni intérieurement d'une membrane (5) de support du rembourrage.

6. Procédé selon la revendication 1, **caractérisé en ce que** ledit moule à géométrie variable (7) est composé d'un premier élément femelle (8) possédant un logement interne (9) approprié pour former une portion de l'armature de support, et une paire d'éléments mâles (10, 13) alternativement interchangeables, adaptés pour être accouplés sélectivement au premier élément femelle (8) pour former un moule respectivement dans sa première configuration (7a) et dans sa deuxième configuration (7b).

7. Procédé selon la revendication 6, **caractérisé en ce qu'**un desdits éléments males (10) est muni d'un logement interne approprié pour former le reste de la structure de l'armature de support, l'autre élément mâle (13) étant muni d'un logement interne approprié pour former la portion restante du support.

8. Procédé selon la revendication 1, **caractérisé en ce que** lesdites première et deuxième matières plastiques injectées sont choisies parmi des résines thermoplastiques possédant une haute compatibilité et une haute affinité chimiophysique pour renforcer leur parfaite adhésion.

9. Procédé selon la revendication 8, **caractérisé en ce que** lesdites première et deuxième matières plastiques ont des pigmentations différentes.

10. Procédé selon la revendication 8, **caractérisé en ce que** ladite première matière plastique est une résine synthétique ayant une résitance mécanique relativement élevée.

11. Procédé selon la revendication 8, **caractérisé en ce que** ladite première matière plastique est choisie parmi les résines de polypropylène (PP) ou le nylon (PA).

12. Procédé selon la revendication 8, **caractérisé en ce que** ladite deuxième matière plastique est une résine élastomère ayant une dureté Shore comprise entre 20 et 60 et de préférence comprise entre 50 et 55.

13. Procédé selon la revendication 12, **caractérisé en ce que** ladite matière plastique est choisie parmi les caoutchoucs thermoplastiques et/ou polyoléfiniques vulcanisables.

14. Support élastique d'une seule pièce (1) tel qu'une selle de bicyclette ou un coussin ou siège similaire, comprenant une armature de support (2) faite d'une première matière plastique relativement rigide, accouplée et liée uniformément à un rembourrage (6), fait d'une matière plastique capable de céder relativement élastiquement, **caractérisé en ce que** ladite armature de support est formée par un élément sensiblement annulaire (16) avec un passage soufflé d'allègement continu (15) adapté pour former une structure sensiblement tubulaire.
